# EUROPEAN PATENT SPECIFICATION

(11) **EP 4 607 182 B1**
(45) Date of publication and mention of the grant of the patent: **28.10.2026**
(21) Application number: 24315053.9
(22) Date of filing: 21.02.2024
(51) Int. Cl.: G01N 21/95, G01N 21/88

(54) **SYSTEM FOR INSPECTNG A PERIPHERAL EDGE OF A SUBSTRATE**
SYSTEM ZUR INSPEKTION EINES RANDBEREICHS EINES SUBSTRATS
SYSTÈME D'INSPECTION D'UN BORD PÉRIPHÉRIQUE D'UN SUBSTRAT

(43) Date of publication of application: 27.08.2025
(73) Proprietor: UNITY SEMICONDUCTOR, 38330 Montbonnot-Saint-Martin (FR)
(72) Inventor: Forge, Sébastien, 38430 St Jean de Moirans (FR)
(74) Representative: IP Trust

(56) References cited:
- WO-A1-2008/143228
- CN-A- 114 460 001
- CN-A- 115 791 807
- CN-U- 206 710 330
- JP-A- 2002 062 267
- JP-A- 2006 133 078
- JP-A- 2009 164 305
- US-A1- 2011 199 480
- US-A1- 2015 198 539

## Description

### FIELD OF THE INVENTION

The present invention relates to a system for the optical inspection of an edge of a substrate to detect the possible presence of defects such as particles, irregularities, cracks, or more generally to characterize its surface condition. The substrate can be a wafer for the manufacture of devices for instance in the field of microelectronics, optics, microsystems, or optoelectronics.

### BACKGROUND OF THE INVENTION

Existing inspection systems generally direct a light beam on the surface of a substrate, for instance a semiconductor wafer. The light reflected and/or scattered from the surface is collected and analyzed to determine characteristics of the surface.

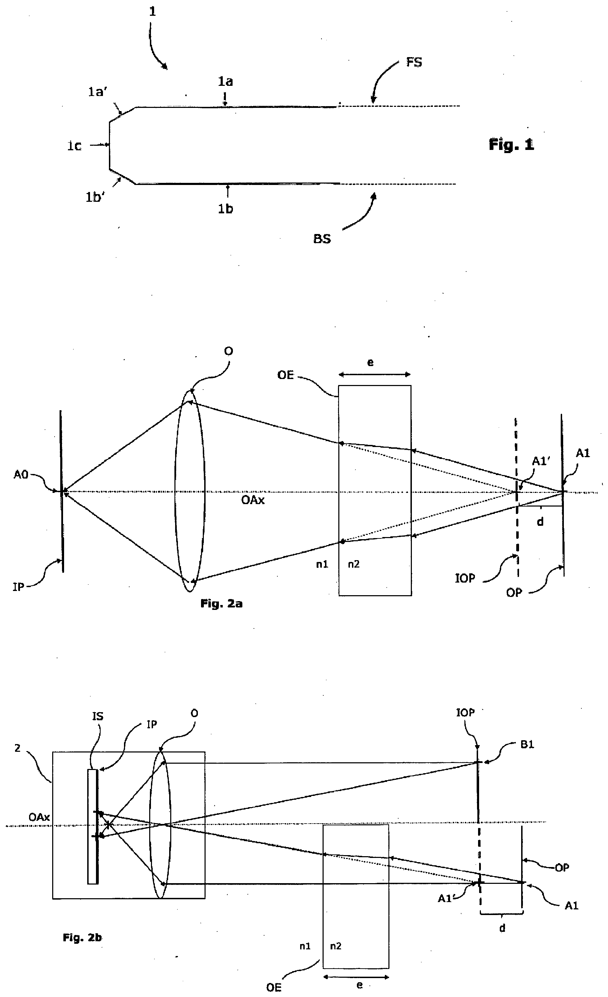

A wafer peripheral edge is more difficult to inspect, as it is composed of a plurality of non-coplanar regions. The geometry of such edge is defined and specified by international standards. For instance, as specified by SEMI M1 (Semiconductor Equipment and Materials International - Polished Single Crystal Silicon Wafers) and with reference to figure 1, a wafer edge is composed of: front and back ring-shaped surfaces 1a,1b corresponding respectively to the periphery of the frontside FS and the backside BS of the wafer 1; top and bottom bevels 1a',1b'; and edge apex 1c. Top and bottom bevels 1a',1b' extend radially between the edge apex 1c and, respectively, the frontside and backside periphery of the wafer. The front and back ring-shaped surfaces 1a, 1b may extend radially over a couple of millimeters over the front and backside of the wafer, while the apex 1c and the bevels 1a',1b' together correspond to the thickness of the wafer, which can be in the order of 775µm or less. Consequently, the unfolded width of the wafer edge may be typically within a few millimeters.

US7822260 discloses a system for inspecting a peripheral edge of a substrate using multiple cameras to inspect different areas of the edge independently of each other, making the whole optical setup rather cumbersome and bulky. Such a system requires lengthy integration and calibration procedures and is also very costly.

US20070127016A1 and US20200201011A1 are based on a rotating vision system with a radial motor to inspect all areas of the edge, but again the device is quite bulky and can have mechanical problems due to the radial motor.

US7280197B1 discloses a system for optical inspection of a substrate edge based on a single camera facing the edge apex. An optical assembly conveys images of multiple regions of the substrate edge onto a linear sensor array of a high pixel count line scan camera. The optical assembly is made of multiple lenses configured and arranged in the system so as to respectively position multiple object planes at the multiple regions of the substrate edge, each object plane being the optical conjugate of the linear sensor array (forming an image plane) by the respective lenses. This approach requires to specifically design and position several lenses in the system, which can be difficult to achieve with the necessary precision. In addition, positioning the camera to face the edge apex is not always a practical arrangement to achieve, notably because of risks of breach of the wafer which is usually rotating at high speed.

Documents US20150198539, CN115791807A, US20110199480A1, JP2009164305A, JP2006133078A and JP2002062267A disclose systems for inspecting the edge of a substrate along a plurality of light paths extending essentially in the main plane of the substrate.

Document CN114460001 discloses a simple optical arrangement for inspecting opposing faces of a display panel.

### OBJECT OF THE INVENTION

A purpose of the invention is to resolve, at least partially, the aforementioned problems.

In particular, a purpose of the invention is to provide a system or device for optically inspecting the edge of a substrate, providing a sharp image of each region of the substrate edge, which is simple in constitution. Another purpose of the invention is to provide such device, which allows providing simultaneously a sharp image of each region of the substrate edge. Another purpose of the invention is to provide such device which is more compact. Another purpose of the invention is to provide such device where the camera is positioned so that it can be more easily protected in case of a breach of a wafer, in particular when rotating at high speed.

### SUMMARY OF THE INVENTION

To this effect, the invention relates to a system for inspecting a peripheral edge of a substrate according to claim 1.

Further and non-limitative features of the invention are presented in the dependent claims

### FIGURES

Many other features and advantages of the present invention will become apparent from reading the following detailed description, when considered in conjunction with the accompanying drawings, in which:
- Figure 1 represents an example of a portion of a peripheral edge of a substrate;
- Figure 2a represents the image of an object as seen through a refractive optical element;
- Figure 2b illustrates the principle of the invention;
- Figure 3a and 3b represent different views of an optical system according to the invention.

### DETAILED DESCRIPTION OF SPECIFIC EMBODIMENTS OF THE INVENTION

Figure 2a illustrates an optical imaging arrangement comprising a camera objective or a lens O with an optical axis OAx and a refractive optical element OE formed by a plate made of a transparent, homogeneous medium, bounded by two flat, parallel faces. The faces of the refractive optical element OE as illustrated on the figure are perpendicular to the optical axis OAx. The refractive optical element OE is composed of a material (for instance a glass) having a refractive index n2 greater than the refractive index n1 of its environment (generally air). In the absence of the refractive optical element OE, an object point A1' of an object would be imaged or conjugated by the lens O into the image point A0 of an image plane IP as illustrated. But by inserting the refractive optical element OE in the optical path between the camera objective and the object, the object point forming the optical conjugate of the image point A0 by the lens O becomes A1. Using the paraxial approximation for simplicity, it can be demonstrated that the distance between the object point A1', now virtual, and the actual object point A1 is d = e(1-n1/n2) where e is the thickness of the optical element OE.

As a result, the refractive optical element OE allows shifting an intermediate object plane IOP which is the optical conjugate of an image plane IP by the lens O into an object plane OP which is further away from the intermediate object plane IOP. More specifically, that object plane OP is separated from the intermediate object plane IOP by a distance d which is determined by the thickness e of the refractive optical element OE and by the optical index ratio n1/n2. For illustrative purpose, when the refractive optical element is made of fused silica (n2=1.458) and the ambient is air (n1=1.000), the distance d is equal to 0.314 times the thickness e of the refractive optical element OE.

Figure 2b presents an optical set-up that illustrates how the refractive optical element OE of figure 2a may be used to image with sufficient sharpness two objects A1, B1 positioned at different distances from the camera. On this figure, a camera 2 comprises a camera objective O and an image sensor IS associated with the camera objective O. The image sensor IS comprises a sensing surface defining an image plane IP. The camera objective O defines an intermediate object plane IOP, the intermediate object plane IOP being the plane conjugated, by the camera objective O, of the image plane IP.

The image sensor IS can comprise a sensing surface with a plurality of pixels in a matrix configuration. It may also comprise a line of pixels, in case of a line sensor. In that case, the image plane is defined by a plane of the image sensor IS, or a plane comprising the line of pixels and being perpendicular to the optical axis OAx.

According to the invention, the camera 2 images a first object B1 positioned at a first distance from the camera 2 and a second object A1 positioned at second distance from the camera 2, the second distance being greater than the first one.

In the illustrated embodiment, the camera 2 is positioned in the optical set-up such that the first object B1 lies in the camera depth of field, in or close to the intermediate object plane IOP, corresponding to the conjugate of the image plane IP by the objective O. The second object A1, being further away from the camera 2, lies outside of its depth of field. To compensate for this greater distance and still provide a sharp image of object A1, a refractive optical element OE is positioned between the camera 2 and the second object A1. The refractive optical element OE is configured (through its thickness e and its optical index n2) in order to shift the intermediate object plane IOP by a distance d, to define a new object plan OP which is optically conjugate of the image plane IP by the camera objective O through the refractive optical element OE. So, the second object A1 is "seen" by the image sensor IS as corresponding to the virtual object A1' located in the intermediate object plan IOP. And so, the second object A1 is positioned in the camera depth of field and can be imaged properly.

The refractive optical element OE can be positioned in such a way to cover only a part of the field of view of the camera, which can be defined as the object plan(s) or points which can be imaged on the sensor IS, as shown in figure 2b. This allows to split the field of view, for instance to image a first field of view located at a first distance and a second field of view located at a second distance simultaneously with the same image sensor IS and the same objective O. In the example illustrated, the refractive optical element OE is positioned in such a way to split the field of view of the camera in 2 half object planes, IOP for the part of the field of view with the object point B1, and OP, shifted along the optical axis of a distance d from IOP, for the other part of the field of view with the object point A1.

Of course, the illustration of Figure 2b is only schematic. It is for instance preferable to control the light issued from the respective object points (A1, B1) in such a way that the light from any object point reaching the image sensor IS has either, not at all, or in totality, crossed the refractive optical element.

According to some embodiments:
- several optical refractive elements or a refractive element with several values of thicknesses can be used to split the field of view into several object planes positioned at different distances from the objective O.
- All parts of the field of view can be imaged through at least one refractive optical element.

The present invention exploits these principles to propose a system for the optical inspection of an edge of a substrate. The system projects an inspection light on a portion of the peripheral edge and images the reflected and/or scattered light to detect the possible presence of defects such as particles, irregularities or more generally to characterize its surface condition.

As already mentioned in the introduction of this disclosure, and as represented on figure 1, the peripheral edge of a substrate is composed of several non-coplanar regions, including for instance front and back annular (i.e ring-shaped) surfaces 1a,1b, top and bottom bevels 1a',1b' and apex 1c.

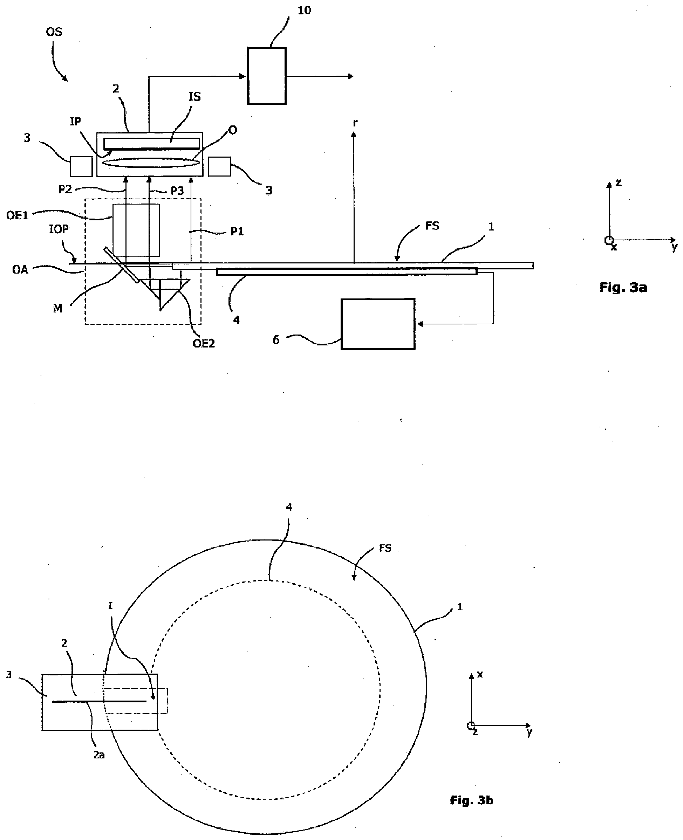

Figures 3a and 3b show an embodiment of a system OS according to the invention to image the peripheral edge of a substrate, in side view and top view, respectively. Generally speaking, the system OS comprises an illumination light source 3 configured to provide the inspection light wave. As shown on Figure 3b, the projection of the inspection light wave on the substrate 1 defines an inspection area I on the substrate, the inspection area I corresponding to an angular portion of the substrate peripheral edge. A camera 2 images the light reflected or scattered from the inspection area I. For instance, a defect (scratch, particle...) present on the illuminated portion of the substrate edge may cause the emission of scattered light radiations which are guided to, and imaged by, the camera 2. And even in the absence of defects, the illumination light which is reflected by the surface of the substrate edge is collected and used to provide an image of the edge of the substrate.

An optical assembly OA is positioned between the substrate 1 and the camera 2, to collect at least part of the light reflected and/or scattered on the inspection area I, and to position a plurality of regions (and preferably all the regions) of the substrate edge within the depth of field of the camera 2.

Advantageously, the system comprises a single camera 2. The optical assembly OA allows to image the non-coplanar regions forming the edge, unfolded, in the image plane of that single camera 2, as this will be explained in greater details in a further passage of this description.

The camera 2 is facing the substrate frontside FS and comprises a camera objective O and an image sensor IS associated with the camera objective O. According to some embodiments, the objective O is a bi-telecentric objective, which limits dimensional errors due to perspective and also reduces distortion. The image sensor IS defines an image plane IP parallel to a main plane (x,y) in which the substrate 1 resides, i.e parallel to the support 4 and to the substrate exposed frontside FS. In the illustrated embodiment, the sensing surface of the image sensor is configured as a line 2a, arranged radially with respect to the substrate 1, as shown in the top view of the system in Figure 3b. The camera can then be a line camera, or a time delay integration (TDI) camera with a CCD or CMOS image sensor. The camera defines, in the system OS, an intermediate object plane IOP that is the conjugated plane of the image plane IP by the camera objective O, in the absence of refractive elements in the optical path, usually in air or another gas. In the illustrated embodiment, the system is configured such that the intermediate object plane IOP is made coplanar with the substrate front side FS. As this is well known, the camera 2 presents a depth of field extending on both sides of the intermediate object plane IOP, that notably depends on its aperture and pixel resolution, and an object disposed in the depth of field of the camera 2 may be imaged sharply.

The illumination source 3 in the illustrated embodiment is formed of a set of light emitting devices (LEDs) positioned alongside (and all around) the camera 2. The inspection light beam produced by the set of LEDs illuminates all regions of the substrate edge portion, guided by the optical elements composing the optical assembly OA. Note that this configuration does not form a necessary feature and the illumination source may be configured differently, for instance by disposing the individual LEDs within the optical system OS to directly expose the different regions of the portion of the peripheral edge under inspection to distinct inspection light beams, i.e. without the distinct inspection light beams being guided by the optical assembly OA. In an alternative to the LEDs, the illumination source 3 may comprise a continuous or a pulsed laser. It may also comprise any other kind of light source such as thermal sources, supercontinuum, plasma light sources. The illumination source 3 may also comprise at least one optical fiber to guide the radiations generated by the light source (LED, laser, ...). The extremity of the fiber is emitting the inspection light wave and can be positioned within the system OS to project the beam on the distinct regions of a peripheral edge portion. If more than one beam is necessary to illuminate the distinct regions, the illumination source may comprise a splitter to propagate the radiation into a plurality of optical fibers.

The system OS also comprises a support 4 for positioning the substrate 1 with respect to the other elements, notably with respect to the illumination source 3 and with respect to the camera 2. In the illustrated embodiment, the support 4 presents a receiving surface parallel to the main plane (x,y) and the substrate 1 is positioned on the support 4 such that a central region of the substrate 1 backside BS is contacting the receiving surface. This configuration allows exposing the frontside FS and all the distinct peripheral edge regions of the substrate 1, including the front and back annular surfaces 1a,1b, top and bottom bevels 1a',1b' and apex 1c. The substrate 1 is maintained on the support 4 for instance by vacuum suction. Of course, other kinds of supports may be used, such as a support with contacting points supporting the substrate only on a few points, each equipped with vacuum suction. In that case, the plan of the contacting points defines the receiving surface.

In the embodiment represented on figure 3a, the support 2 may be translated in the main plane (x,y) in which the substrate 1 resides. Advantageously, the support may also be translated according to a direction z perpendicular to the main plane (x,y). With such a configuration, it is possible to precisely calibrate the inspection area I on the substrate 1 and make sure that this area includes all the distinct edge regions. The support 4 may be rotated around an axis r, perpendicular to the main plane (x,y) and centered on the substrate 1, so that, by rotating the support 4, the complete peripheral edge of the substrate 1 may be scanned by the illumination light beam and imaged by the camera 2.

The movement of the support is coordinated by a controller 6 that may comprise a microcontroller, data storage, input/output ports connected to actuators and motors for displacing and/or rotating the support 4, and to other elements of the system OS, and further computing resources that are configured, in hardware or in software, to precisely control the scanning of the substrate peripheral edge. The substrate 1 being precisely positioned on the support 4 within the system OS, the controller 6 stores and controls the position (for instance in linear or polar coordinates) of the inspection area I in a referential linked to the substrate 3. Consequently, the location of the inspection area I on the substrate 3 can be known at each moment.

The images provided by the camera 2 are provided to a processing unit 10. Such processing unit comprises a computer or a microcontroller, with data storage and interface ports. That processing unit 10 is also connected to the controller 6 which provides the location of the inspection area I on the wafer at any time. The processing unit 10 is configured to provide an unfolded map of the substrate edge, including preferably all distinct regions of the peripheral edge, allowing to identify and locate defects present on this peripheral edge.

The optical assembly OA collects at least in part the light reflected and/or scattered by the peripheral edge of the substrate.

The optical assembly OA is notably configured for directing the light reflected and/or scattered by a first region of the peripheral edge of the substrate, along a first light path, toward the camera 2. The camera 2 is then positioned with respect to the substrate 1 such that the first region lies in the camera depth of field, at or close to the intermediate object plane IOP.

The optical assembly OA is also configured for directing the light reflected and/or scattered by a second region of the peripheral edge, distinct from the first region, along a second light path toward the camera 2, the second light path being longer than the first light path.

The optical assembly OA comprises at least one refractive optical element inserted into the second light path and configured to position the second region in the camera depth of field, i.e. at or close to the intermediate object plane IOP, using the principle exposed in relation to the description of figures 2a,2b. By "refractive optical element" it is referred to an optical element made of a material transparent to the inspection light beam and which has a refractive index greater than the one of the ambient atmosphere (generally air). This material may for example be fused silica or a glass.

In the embodiment of figures 3a,3b, the camera 2 is positioned such that the intermediate object plane IOP coincides or is close to the annular (ring-shaped) front surface 1a and top bevel 1a'of the substrate peripheral edge. Since the camera 2 is positioned directly above these regions, the other regions of the peripheral edge (apex 1c, bottom bevel 1b' and annular back surface 1b) are positioned further away from the camera 2.

In this embodiment, the light reflected and/or scattered by the annular front surface 1a and by the top bevel 1a' is not directed through a refractive element of the optical assembly OA. This light is directly directed toward the camera 2 along a relatively short first light path P1.

Conversely, the light reflected and/or scattered by the apex 1c is intercepted by the optical assembly OA and guided by a mirror M toward the camera along a second light path P2, longer than the first light path. The light reflected and/or scattered by the annular back surface 1b and by the bottom bevel 1b' is also intercepted by the optical assembly OA and guided by reflecting prims OE2 toward the camera 2 along a third light path P3, longer than the second and first path.

To position the regions further away from the camera 2 (apex 1c, annular back surface 1b and by the bottom bevel 1b') within the camera depth of field, the optical assembly OA comprises a plurality of refractive optical element OE1, OE2. The refractive optical elements are configured (through their thickness and optical indices as this has been explained in a prior passage of this description) to define new object planes shifted away from the intermediate object plane IOP to coincide with respectively the apex 1c, the bottom bevel 1b' and the annular back surface 1b. And so, all parts of the edge of the substrate are "seen" by the camera 2 as being virtually positioned on or close to the intermediate object plane IOP.

More precisely, the length of the second light path P2 is differing from the length of the first light path P1 by the distance separating the intermediate object plane IOP to the edge apex 1c, through the directing mirror M. This differential length may be in the order of several tens of millimeters. To compensate for this differential length, the optical assembly OA represented on figure 3a comprises a plate OE1 made of transparent material (to the illumination beam), for instance made of glass, optically disposed in the second light path P2, but not in the first light path P1. By selecting the thickness of the plate, for instance in the range between 20mm to 80mm depending on the differential length to compensate, it is possible to position the virtual image of the apex 1 at or close to the intermediate object plane IOP, within the depth of field of the camera 2.

A similar reasoning may be applied to compensate the differential length of the third light path P3, between the bottom bevel 1b', back annular surface 1b and the camera 2, with respect to the first light path P1. The third light path P3 is intersecting the plate OE1, allowing to compensate part of this differential length. In addition, the optical assembly comprises a second refractive optical element OE2, in the form of prims. In addition to guiding the reflected and/or diffracted light toward the camera 2, this second refractive optical element OE2 also adds a thickness of refractive material that contribute to position the virtual image of the bottom bevel 1b' and of the back annular surface 1b, as viewed by the camera 2, at or close to the intermediate object plane IOP, within the depth of field of the camera 2.

So, the optical assembly allows compensating the difference of length of the various light paths towards the object planes, but also to accommodate for the different orientation and positions of these object planes. For instance, the apex 1c is perpendicular to the front annual surface 1a, and the back annular surface 1b requires to be imaged from the opposite direction compared to the front annual surface 1a. In addition, thanks to the arrangement of light paths and of the refractive elements, the respective objects planes are "seen" by the camera to correspond to portions or series of points of the intermediate object plane (IOP), which are in turn imaged into different portions of the image plane IP by the objective O. As a result, the image plane IP provides an unfolded image of the peripheral edge, with for instance along the pixels of the line sensor: the front annual surface 1a, the top bevel 1a', the apex 1c, the bottom bevel 1b' and the back annular surface 1b.

So, with the proposed optical assembly OA, it is possible to provide a sharp, unfolded image of the complete peripheral edge of the substrate, by imaging the illuminated portion while rotating the support 4. The system OS is made particularly compact and simple by using a single camera facing the substrate frontside FS.

Other variations to the disclosed embodiment can be understood and effected by those skilled in the art in practicing the claimed invention, from a study of the drawings, the disclosure, and the appended claims.

In particular, it is not necessary that the camera 2 images the complete substrate peripheral edge, i.e. including all its distinct regions. In certain cases, only specific regions of the peripheral edge may be imaged, rather than all of them. The optical assembly may also have fewer refractive optical elements than described in relation to the embodiment of figures 3a and 3b.

Also, in an embodiment that is not covered by the invention the optical assembly AO may also comprise a refractive element configured to also intercept the light propagating along the first path, for instance for guiding the light reflected and/or scattered on the first region toward the camera, or for positioning the intermediate object plane away from the substrate frontside.

The optical assembly may comprise one or more light directing elements, such as the mirror M or the prism OE2 of the illustrated embodiment, to direct the light issued from distinct regions toward the camera 2, in particular when the distinct region presents differing angular orientations.

In the described embodiment, the bottom bevel 1b' and back annular surface 1b combine to form a single region of the substrate edge. Similarly, the top bevel 1a' and front annular surface 1a also combine to form another region of the substrate edge. This is due to the negligible difference in elevation between them. In other instances, it may be beneficial to consider the respective bevels 1a',1b', the front and back annular surfaces 1a,1b as distinct regions. In such instances, the system may comprise more refractive optical elements than described in relation to the embodiment of figures 3a and 3b to compensate the differential length separating each region to the camera.

In the same way, the substate edge may be defined differently according to other standards, with other regions. In that case, the system may be adapted with other configurations of refractive elements to image these respective regions.

The optical assembly OA described includes optical directing elements, such as the mirror M and the prims OE2, along with optical refractive elements, plate OE1 and prims OE2. But this should not be seen as limitative. In particular, the optical assembly OA may comprise further or different optical directing /refractive elements than the one described. The optical assembly may also comprise further optical elements, different from the directing optical element and refractive optical elements, for providing further function to the system. In certain embodiments, however, such as the one described with respect to figures 3a, 3b, the optical assembly is deprived of any focusing lens, which makes it simple to configure and calibrate.

## Claims

1. A system (OS) for inspecting a peripheral edge of a substrate (1) by projecting an inspection light wave on a portion of the peripheral edge and by imaging the reflected or scattered light, the system comprising:
• a support (4) for positioning the substrate in a main plane (x,y) in the system (OS), such as to expose the peripheral edge of the substrate (1);
• an illumination source (3) configured to provide the inspection light wave;
• a camera (2) for imaging the light reflected and/or scattered by the peripheral edge of the substrate (1), the camera comprising a camera objective (O) and an image sensor (IS) associated with the camera objective (O), the image sensor (IS) presenting a sensing surface defining an image plane (IP) parallel to the main plane (x,y);
• an optical assembly (OA) collecting at least in part the reflected and/or scattered light and configured for directing:
i. the light reflected and/or scattered on a first region located on an annular surface (1a) on the frontside of the substrate, along a first light path (P1) toward the camera (2), and
ii. the light reflected or scattered on a second region located on an apex (1c) of an edge of the substrate, distinct from the first region, along a second light path (P2) toward the camera (2), the second light path (P2) being longer than the first light path (P1);
iii. the light reflected or scattered on a third region located on an annular surface (1b) disposed on the backside of the substrate, different from the first and second regions, along a third light path (P3) toward the camera (2), the third light path (P3) being longer than the first (P1) and second light path (P2),
wherein the camera (2) is positioned with respect to the substrate (1) such that the first region lies directly in the camera's depth of field, without being directed through a refractive element of the optical assembly (OA), and the optical assembly (OA) comprises
• at least one refractive optical element (OE1), positioned in the second light path (P2) and in the third light path (P3), and configured to position the second region in the camera depth of field, and
• at least one further refractive optical element (OE2) positioned in the third light path (P3) and configured to position the third region in the camera depth of field.

2. A system (OS) according to claim 1, wherein the at least one refractive optical element (OE1) and the at least one further refractive optical element (OE2) have a thickness and a refractive index along the second light path (P2) and, respectively, third light path (P3) adjusted to shift an intermediate object plane (IOP), optical conjugate of the image plane (IP) by the camera objective (O), on the second region and, respectively, on the third region.

3. A system (OS) according to claim 1 or 2, wherein the optical assembly (OA) comprises at least one light directing element (M,) to direct the light issued from the second region towards the camera (2).

4. A system (OS) according to any preceding claim, which comprises a refractive optical element (OE1, OE2) in the form of a glass plate.

5. A system (OS) according to any preceding claim, which comprises a refractive optical element (OE1, OE2) in the form of a prism.

6. A system (OS) according to any preceding claim, wherein the optical assembly (OA) is arranged to respectively direct the light from the different regions of the peripheral edge of the substrate towards different parts of the image sensor (IS).

7. A system (OS) according to any preceding claim, wherein the camera (2) is a line or a TDI camera.

8. A system (OS) according to any preceding claim, wherein the camera (2) comprises a single camera objective (O), and the optical assembly (AO) is arranged to direct the light reflected and/or scattered on the different regions of the peripheral edge of the substrate through said single camera objective (O).

9. A system (OS) according to any preceding claim, wherein the optical assembly (OA) is deprived of any focusing lens.

10. A system (OS) according to any preceding claim, wherein the camera objective (O) comprises a bi-telecentric lens.

11. A system (OS) according to any preceding claim, wherein the illumination source (3) comprises a plurality of LEDs positioned alongside the camera (2).

## Patentansprüche

1. System (OS) zum Inspizieren einer Umfangskante eines Substrats (1) durch Projizieren einer Inspektionslichtwelle auf einen Abschnitt der Umfangskante und durch Abbilden des reflektierten oder gestreuten Lichts, das System umfassend:
• einen Träger (4) zum Positionieren des Substrats in einer Hauptebene (x,y) in dem System (OS), um auf diese Art die Umfangskante des Substrats (1) freizulegen;
• eine Beleuchtungsquelle (3), die konfiguriert ist, um die Inspektionslichtwelle bereitzustellen;
• eine Kamera (2) zum Abbilden des durch den Umfangsrand des Substrats (1) reflektierten und/oder gestreuten Lichts, die Kamera umfassend ein Kameraobjektiv (O) und einen dem Kameraobjektiv (O) zugeordneten Bildsensor (IS), wobei der Bildsensor (IS) eine Erfassungsoberfläche vorweist, die eine Bildebene (IP) parallel zu der Hauptebene (x,y) definiert;
• eine optische Baugruppe (OA), die das reflektierte und/oder gestreute Licht mindestens teilweise sammelt und konfiguriert ist zum Lenken:
i. des reflektierten und/oder gestreuten Lichts an einem ersten Bereich, der sich auf einer ringförmigen Oberfläche (1a) auf der Vorderseite des Substrats befindet, entlang eines ersten Lichtpfads (P1) in Richtung der Kamera (2), und
ii. des reflektierten oder gestreuten Lichts an einem von dem ersten Bereich verschiedenen zweiten Bereich, der sich an einem Scheitelpunkt (1c) einer Kante des Substrats befindet, entlang eines zweiten Lichtpfads (P2) in Richtung der Kamera (2), wobei der zweite Lichtpfad (P2) länger als der erste Lichtpfad (P1) ist;
iii. des reflektierten oder gestreuten Lichts an einem von dem ersten und zweiten Bereich unterschiedlichen dritten Bereich, der sich auf einer ringförmigen Oberfläche (1b) befindet, die auf der Rückseite des Substrats eingerichtet ist, entlang eines dritten Lichtpfads (P3) in Richtung der Kamera (2), wobei der dritte Lichtpfad (P3) länger als der erste (P1) und der zweite Lichtpfad (P2) ist,
wobei die Kamera (2) in Bezug auf das Substrat (1) derart positioniert ist, dass der erste Bereich direkt in der Schärfentiefe der Kamera liegt, ohne durch ein refraktives Element der optischen Baugruppe (OA) gelenkt zu werden, und die optische Baugruppe (OA) umfasst
• mindestens ein refraktives optisches Element (OE1), das in dem zweiten Lichtpfad (P2) und in dem dritten Lichtpfad (P3) positioniert ist und konfiguriert ist, um den zweiten Bereich in der Schärfentiefe der Kamera zu positionieren, und
• mindestens ein weiteres refraktives optisches Element (OE2), das in dem dritten Lichtpfad (P3) positioniert ist und konfiguriert ist, um den dritten Bereich in der Schärfentiefe der Kamera zu positionieren.

2. System (OS) nach Anspruch 1, wobei das mindestens eine refraktive optische Element (OE1) und das mindestens eine weitere refraktive optische Element (OE2) eine Dicke und einen Refraktionsindex entlang des zweiten Lichtpfads (P2) beziehungsweise dritten Lichtpfads (P3) aufweisen, die angepasst sind, um eine Zwischenobjektebene (IOP), die durch das Kameraobjektiv (O) zu der Bildebene (IP) optisch konjugiert ist, auf den zweiten Bereich beziehungsweise auf den dritten Bereich zu verschieben.

3. System (OS) nach Anspruch 1 oder 2, wobei die optische Baugruppe (OA) mindestens ein lichtlenkendes Element (M,) umfasst, um das von dem zweiten Bereich ausgegebene Licht in Richtung der Kamera (2) zu lenken.

4. System (OS) nach einem der vorstehenden Ansprüche, das ein refraktives optisches Element (OE1, OE2) in Form einer Glasplatte umfasst.

5. System (OS) nach einem der vorstehenden Ansprüche, das ein refraktives optisches Element (OE1, OE2) in Form eines Prismas umfasst.

6. System (OS) nach einem der vorstehenden Ansprüche, wobei die optische Baugruppe (OA) angeordnet ist, um das Licht von den unterschiedlichen Bereichen der Umfangskante des Substrats jeweils in Richtung unterschiedlicher Teile des Bildsensors (IS) zu lenken.

7. System (OS) nach einem der vorstehenden Ansprüche, wobei die Kamera (2) eine Zeilen- oder eine TDI-Kamera ist.

8. System (OS) nach einem der vorstehenden Ansprüche, wobei die Kamera (2) ein einziges Kameraobjektiv (O) umfasst und die optische Baugruppe (AO) angeordnet ist, um das an den verschiedenen Bereichen der Umfangskante des Substrats reflektierte und/oder gestreute Licht durch das einzige Kameraobjektiv (O) zu lenken.

9. System (OS) nach einem der vorstehenden Ansprüche, wobei die optische Baugruppe (OA) frei von jeglicher Fokussierlinse ist.

10. System (OS) nach einem der vorstehenden Ansprüche, wobei das Kameraobjektiv (O) eine bitelezentrische Linse umfasst.

11. System (OS) nach einem der vorstehenden Ansprüche, wobei die Beleuchtungsquelle (3) eine Vielzahl von LEDs umfasst, die seitlich entlang der Kamera (2) positioniert sind.

## Revendications

1. Système (OS) destiné à inspecter un bord périphérique d'un substrat (1) en projetant une onde lumineuse d'inspection sur une portion du bord périphérique et par imagerie de la lumière réfléchie ou diffusée, le système comprenant :
• un support (4) pour positionner le substrat dans un plan principal (x,y) dans le système (OS), de manière à exposer le bord périphérique du substrat (1) ;
• une source d'éclairage (3) configurée pour fournir l'onde lumineuse d'inspection ;
• une caméra (2) pour imager la lumière réfléchie et/ou diffusée par le bord périphérique du substrat (1), la caméra comprenant un objectif de caméra (O) et un capteur d'image (IS) associé à l'objectif de caméra (O), le capteur d'image (IS) présentant une surface de détection définissant un plan d'image (IP) parallèle au plan principal (x,y) ;
• un ensemble optique (OA) collectant au moins en partie la lumière réfléchie et/ou diffusée et configuré pour diriger :
i. la lumière réfléchie et/ou diffusée sur une première région située sur une surface annulaire (1a) sur la face avant du substrat, le long d'un premier trajet lumineux (P1) vers la caméra (2), et
ii. la lumière réfléchie ou diffusée sur une deuxième région située sur un sommet (1c) d'un bord du substrat, distincte de la première région, le long d'un deuxième trajet lumineux (P2) vers la caméra (2), le deuxième trajet lumineux (P2) étant plus long que le premier trajet lumineux (P1) ;
iii. la lumière réfléchie ou diffusée sur une troisième région située sur une surface annulaire (1b) disposée sur la face arrière du substrat, différente des première et deuxième régions, le long d'un troisième trajet lumineux (P3) vers la caméra (2), le troisième trajet lumineux (P3) étant plus long que le premier (P1) et le deuxième trajet lumineux (P2),
dans lequel la caméra (2) est positionnée par rapport au substrat (1) de telle sorte que la première région se trouve directement dans la profondeur de champ de la caméra, sans être dirigée à travers un élément de réfraction de l'ensemble optique (OA), et l'ensemble optique (OA) comprend
• au moins un élément optique de réfraction (OE1), positionné dans le deuxième trajet lumineux (P2) et dans le troisième trajet lumineux (P3), et configuré pour positionner la deuxième région dans la profondeur de champ de la caméra, et
• au moins un autre élément optique de réfraction (OE2) positionné dans le troisième trajet lumineux (P3) et configuré pour positionner la troisième région dans la profondeur de champ de la caméra.

2. Système (OS) selon la revendication 1, dans lequel l'au moins un élément optique de réfraction (OE1) et l'au moins un autre élément optique de réfraction (OE2) ont une épaisseur et un indice de réfraction le long du deuxième trajet lumineux (P2) et, respectivement, du troisième trajet lumineux (P3) ajustés pour décaler un plan objet intermédiaire (IOP), conjugué optique du plan d'image (IP) par l'objectif de caméra (O), sur la deuxième région et, respectivement, sur la troisième région.

3. Système (OS) selon la revendication 1 ou 2, dans lequel l'ensemble optique (OA) comprend au moins un élément de direction de lumière (M,) pour diriger la lumière issue de la deuxième région vers la caméra (2).

4. Système (OS) selon l'une quelconque des revendications précédentes, qui comprend un élément optique de réfraction (OE1, OE2) sous la forme d'une plaque de verre.

5. Système (OS) selon l'une quelconque des revendications précédentes, qui comprend un élément optique de réfraction (OE1, OE2) sous la forme d'un prisme.

6. Système (OS) selon l'une quelconque des revendications précédentes, dans lequel l'ensemble optique (OA) est agencé pour diriger respectivement la lumière provenant des différentes régions du bord périphérique du substrat vers différentes parties du capteur d'image (IS).

7. Système (OS) selon l'une quelconque des revendications précédentes, dans lequel la caméra (2) est une caméra linéaire ou TDI.

8. Système (OS) selon l'une quelconque des revendications précédentes, dans lequel la caméra (2) comprend un unique objectif de caméra (O), et l'ensemble optique (AO) est agencé pour diriger la lumière réfléchie et/ou diffusée sur les différentes régions du bord périphérique du substrat à travers ledit unique objectif de caméra (O).

9. Système (OS) selon l'une quelconque des revendications précédentes, dans lequel l'ensemble optique (OA) est dépourvu de toute lentille de focalisation.

10. Système (OS) selon l'une quelconque des revendications précédentes, dans lequel l'objectif de caméra (O) comprend une lentille bi-télécentrique.

11. Système (OS) selon l'une quelconque des revendications précédentes, dans lequel la source d'éclairage (3) comprend une pluralité de DEL positionnées à côté de la caméra (2).
